# EUROPEAN PATENT SPECIFICATION

(11) **EP 3 399 894 B1**
(45) Date of publication and mention of the grant of the patent: **04.05.2022**
(21) Application number: 17700599.8
(22) Date of filing: 03.01.2017
(51) Int. Cl.: A47J 37/06

(54) **A TOASTER**
TOASTER
GRILLE-PAIN

(30) Priority: 05.01.2016 TR 201600117
(43) Date of publication of application: 14.11.2018
(73) Proprietor: Arçelik Anonim Sirketi, 34445 Istanbul (TR)
(72) Inventor: ENGIN, Mert, 34950 Istanbul (TR); ERSARI, Mujdat, 34950 Istanbul (TR); ATAY, Canyigit, 34950 Istanbul (TR); ODACI, Sahin, 34950 Istanbul (TR); SEVEN, Oner, 34950 Istanbul (TR)
(86) International application number: PCT/EP2017/050063
(87) International publication number: WO 2017/118623

(56) References cited:
- EP-A1- 2 959 811
- DE-A1- 2 929 223
- US-A1- 2013 019 761
- US-B1- 6 276 263

## Description

The present invention relates to a toaster comprising a plate.

In order to more quickly and efficiently cook foods such as toast or grill by using a toaster, the user pushes the handle of the toaster downwards so as to press the upper unit of the toaster onto the lower unit. However, during this process, the rear part of the upper unit moves upwards due to the height of the food between the upper unit and the lower unit. In this case, the food between the upper unit and the lower unit may slide, thus preventing homogeneous heating.

In the state of the art British Patent Document No. GB2411818, a toaster is disclosed.

The document EP 2 959 811 discloses a toaster with an upper a lower part that are hinged to one another so as to open the toaster by pivoting the upper part into an upright position. The upper part provides laterally extending pins with protrusion that move within a vertically arranged slot of the lower part.

The aim of the present invention is the realization of a toaster that provides homogeneous cooking.

The toaster realized in order to attain the aim of the present invention, explicated in the first claim and the respective claims thereof comprises a lower unit whereon the food to be cooked is placed; an upper unit that has a horizontal position wherein the upper unit covers the lower unit and a vertical position to which the upper unit is brought by being moved from the horizontal position and wherein the upper unit is perpendicular to the lower unit; a handle that is disposed on the upper unit and that enables the upper unit to be moved; at least one shaft that is disposed on the upper unit; and a plate that is disposed on the lower unit and that has a channel wherein the shaft is movably placed.

Toaster of the present invention comprises at least one protrusion that is disposed on the shaft and at least one housing that is disposed on the channel and wherein the protrusion is fitted. When the protrusion is fitted into the housing, the upper unit is locked and when the upper unit is pushed downwards by means of the handle, the rear part is prevented from involuntarily move upwards.

In an embodiment of the present invention, the toaster comprises the protrusion fitted into the housing when the upper unit is in the horizontal position. When the upper unit is changed to the horizontal position from the vertical position, the shaft rotates in the channel and the protrusion is fitted into the housing. When the upper unit is in the horizontal position as the upper unit is pushed towards the lower unit by means of the handle, the protrusion is fixed within the housing and the rear part of the upper unit is prevented from moving upwards. Thus, the food is prevented from sliding between the lower unit and the upper unit, and the lower unit and the upper unit are enabled to properly contact the food.

In another embodiment of the present invention, the toaster comprises the channel that limits the movement of the upper unit in the vertical direction when the upper unit is in the vertical position. The shaft moves inside the channel between the upper end and the lower end of the channel. When the upper unit is changed to the vertical position from the horizontal position, the shaft rotates in the channel and the protrusion leaves the housing and is positioned so as to be seated onto the base of the channel. When the upper unit is in the vertical position, the protrusion does not contact any surface along the channel, thus, the upper unit is enabled to move in the vertical direction as much as the length of the channel. Thus, the upper unit is enabled to be moved upward so as to cover the food in accordance with the thickness of the food placed onto the lower unit.

In another embodiment of the present invention, the channel has a lower housing and an upper housing arranged one above the other in the vertical direction. In this embodiment, the height of the lower housing from the base of the channel is as much as the height of a toast. The upper housing is positioned at a level from the base of the channel as much as a grill. By fitting the protrusion into the lower housing and the upper housing, the user can efficiently cook all the foods placed into the toaster independently from the height of the food.

In another embodiment of the present invention, the toaster comprises a lower position wherein the protrusion is fitted into the lower housing and an upper position wherein the protrusion is fitted into the upper housing after the upper unit is brought to the vertical position and then pulled upwards and changed back to the horizontal position. The user adjusts the position of the toaster according to the food to be cooked and thus, by preventing the food between the lower unit and the upper unit from sliding, the user is enabled to safely press the upper unit.

By means of the present invention, although the front part of the upper unit is pushed downwards when the handle is pushed during the cooking process, the rear part is prevented from moving upwards. Thus, the cooking process can be quickly performed, providing energy saving.

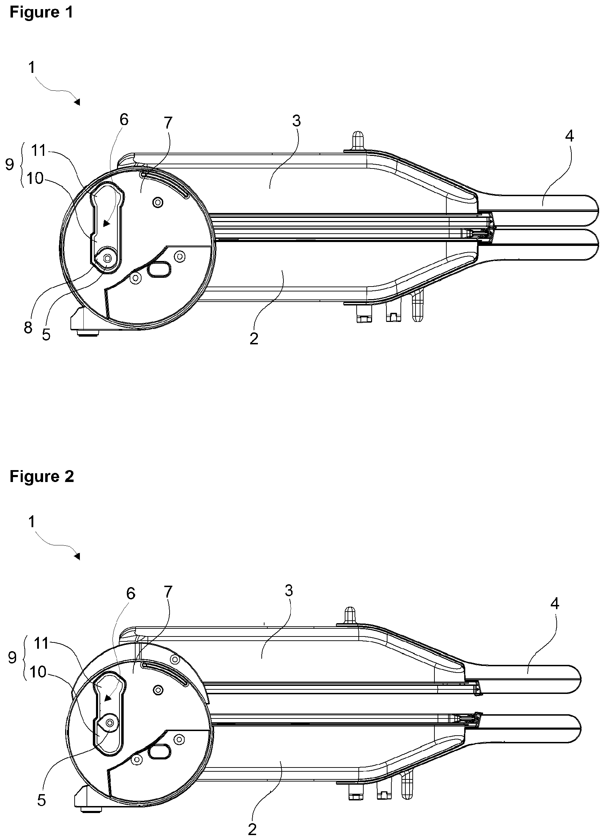

The toaster realized in order to attain the aim of the present invention is illustrated in the attached figures where
Figure 1 - is a schematic view of a toaster.
Figure 2 - is the sideways schematic view of the toaster when the toaster is in the lower position in an embodiment of the present invention.

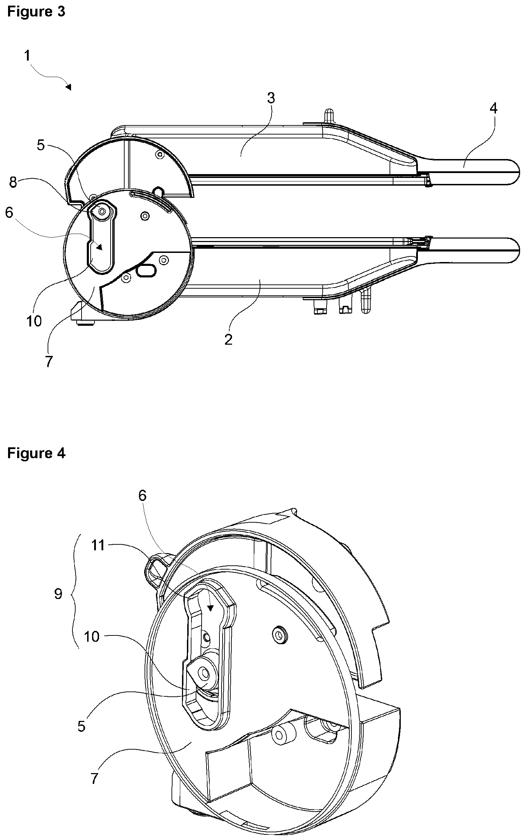

Figure 3 - is the sideways schematic view of the toaster when the toaster is in the upper position in another embodiment of the present invention.
Figure 4 - is the perspective view of the plate and the shaft in another embodiment of the present invention.

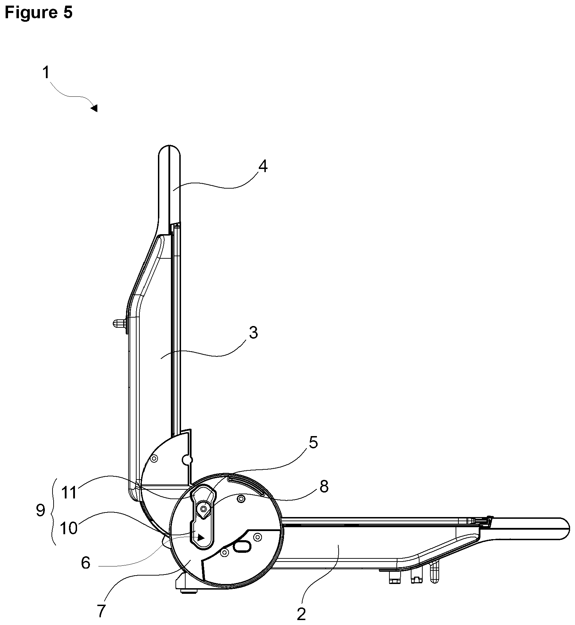

Figure 5 - is the sideways schematic view of the toaster when the upper unit is in the vertical position in another embodiment of the present invention.

The elements in the figures are numbered as follows:
1. Toaster
2. Lower unit
3. Upper unit
4. Handle
5. Shaft
6. Channel
7. Plate
8. Protrusion
9. Housing
10. Lower housing
11. Upper housing

The toaster (1) comprises a lower unit (2) whereon the food to be cooked is placed; an upper unit (3) that has a horizontal position wherein the upper unit (3) covers the lower unit (2) and a vertical position to which the upper unit (3) is brought by being moved from the horizontal position and wherein the upper unit (3) is perpendicular to the lower unit (2); a handle (4) that is disposed on the upper unit (3) and that enables the upper unit (3) to be moved; at least one shaft (5) that is disposed on the upper unit (3); and a plate (7) that is disposed on the lower unit (2) and that has a channel (6) wherein the shaft (5) is movably placed.

The toaster (1) of the present invention comprises
- at least one protrusion (8) that is disposed on the shaft (5), and
- at least one housing (9) that is disposed on the channel (6) and wherein the protrusion (8) is fitted.

In the toaster (1) of the present invention, in order to carry out the cooking process the user lifts and brings the upper unit (3) to the vertical position and places the food onto the lower unit (2). By changing the upper unit (3) from the vertical position to the horizontal position, the user enables the food to be squeezed between the lower unit (2) and the upper unit (3). When the upper unit (3) is moved from the vertical position to the horizontal position, the shaft (5) connected to the upper unit (3) rotates inside the channel (6). During the rotation of the shaft (5) the protrusion (8) is fitted into the housing (9) and thus the shaft (5) is stopped.

In an embodiment of the present invention, the toaster (1) comprises the protrusion (8) fitted into the housing (9) when the upper unit (3) is in the horizontal position. When the upper unit (3) is changed to the horizontal position, the protrusion (8) is fitted into the housing (9). When the user presses the upper unit (3) onto the food by means of the handle (4) after the protrusion (8) is fitted into the housing (9), the protrusion (8) bears against the edge of the housing (9), thus ending the movement of the shaft (5) in the vertical direction. Thus, when the handle (4) disposed at the front part of the upper unit (3) is pressed down when the upper unit (3) is in the horizontal position, the rear part of the upper unit (3) is prevented from moving upwards. Consequently, the food is prevented from sliding while homogeneous cooking of the food is provided.

In another embodiment of the present invention, the toaster (1) comprises the channel (6) that limits the movement of the upper unit (3) in the vertical direction when the upper unit (3) is in the vertical position. When the upper unit (3) is moved from the horizontal position to the vertical position, the shaft (5) rotates inside the channel (6), thus enabling the protrusion (8) to leave the housing (9). Thus, when the upper unit (3) is pulled upwards, the protrusion (8) does not bear against the edge of the housing (9) and the upper unit (3) is enabled to be moved in the vertical direction along the channel (6). Consequently, the movement of the upper unit (3) in the vertical direction is limited by the length of the channel (6), the lower part of the shaft (5) is seated onto the base of the channel (6) when the upper unit (3) is free, and when the upper unit (3) is pulled upwards in the vertical position, the shaft (5) is moved along the channel (6) until the upper part of the shaft (5) hits the ceiling of the channel (6).

In another embodiment of the present invention, the channel (6) has a lower housing (10) and an upper housing (11) arranged one above the other in the vertical direction. In this embodiment, the protrusion (8) is fitted into the lower housing (10) or the upper housing (11) depending on the height of the food to be cooked and the rear part of the upper unit (3) is fixed. Thus, when foods such as toast, etc. with a lesser height are to be cooked, the protrusion (8) is fitted into the lower housing (10) and when relatively higher foods such as grill are to be cooked, the protrusion (8) is fitted into the upper housing (11).

In another embodiment of the present invention, the toaster (1) comprises a lower position (P1) wherein the protrusion (8) is fitted into the lower housing (10) and an upper position (P2) wherein the protrusion (8) is fitted into the upper housing (11) after the upper unit (3) is brought to the vertical position and then pulled upwards and changed back to the horizontal position. When the toaster (1) is in the lower position (P1) the upper unit (3) is in the horizontal position and the protrusion (8) is in the lower housing (10). As the upper unit (3) is moved upwards along the channel (6) and changed back to the horizontal position after the upper unit (3) is brought to the vertical position, the protrusion (8) is fitted into the upper housing (11). By means of this embodiment, while the user cooks or grills with the toaster (1), he/she can press onto the handle (4) even if he/she cooks foods with higher lengths. Thus, foods that are both to be toasted and grilled in the toaster (1) can be more quickly and efficiently cooked.

In the toaster (1) of the present invention, by means of the protrusion (8) that is disposed on the shaft (5) arranged on the upper unit (3) and that is fitted into the housing (9) arranged on the channel (6) wherein the shaft (5) moves, when the user presses onto the handle (4), the rear part of the upper unit (3) is locked and the food is enabled to be homogeneously cooked.

## Claims

1. A toaster (1) **comprising** a lower unit (2) whereon the food to be cooked is placed; an upper unit (3) that has a horizontal position wherein the upper unit (3) covers the lower unit (2) and a vertical position to which the upper unit (3) is brought by being moved from the horizontal position and wherein the upper unit (3) is perpendicular to the lower unit (2); a handle (4) that is disposed on the upper unit (3) and that enables the upper unit (3) to be moved; at least one shaft (5) that is disposed on the upper unit (3); a plate (7) that is disposed on the lower unit (2) and that has a channel (6) wherein the shaft (5) is movably placed; at least one protrusion (8) that is disposed on the shaft (5), and the channel (6) has a lower housing (10) and an upper housing (11) being arranged one above the other in the vertical direction, the protrusion (8) is fitted within the lower housing (10) and the upper housing (11); **characterized by** a lower position (P1) wherein the protrusion (8) is fitted into the lower housing (10) and an upper position (P2) wherein the protrusion (8) is fitted into the upper housing (11) after the upper unit (3) is brought to the vertical position and then pulled upwards and changed back to the horizontal position.

2. A toaster (1) as in Claim 1, **characterized by** the protrusion (8) that is fitted into one of the lower housing (10) and the upper housing (11) when the upper unit (3) is in the horizontal position.

3. A toaster (1) as in Claim 1 or 2, **characterized by** the channel (6) that limits the movement of the upper unit (3) in the vertical direction when the upper unit (3) is in the vertical position.

4. A toaster (1) as in any one of the above claims, **characterized in that** when the upper unit (3) is in the vertical position, the protrusion (8) not contacting any surface along the channel (6) such that the upper unit (3) can move along the length of the channel (6) in vertical direction.

5. A toaster (1) as in any one of the above claims, **characterized in that** when the upper unit (3) is in the lower position (P1) the protrusion (8) being fixed within the lower housing (10) and when the upper unit (3) is in the upper position (P2) the protrusion being fixed within the upper housing (11), such that the rear part of the upper unit (3) is prevented from moving upwards when the upper unit (3) is pushed towards the lower unit (2) by means of the handle (4).

## Patentansprüche

1. Ein Toaster (1) **umfasst** eine untere Einheit (2), auf der das zu garende Essen platziert wird; eine obere Einheit (3), die eine horizontale Position hat, wobei die obere Einheit (3) die untere Einheit (2) bedeckt, und eine vertikale Position, in die die obere Einheit (3) gebracht wird, indem sie aus der horizontalen Position bewegt wird, und wobei die obere Einheit (3) senkrecht zur unteren Einheit (2) steht; einen Griff (4), der an der oberen Einheit (3) angeordnet ist und der es ermöglicht, die obere Einheit (3) zu bewegen; mindestens eine Schaft (5), die an der oberen Einheit (3) angeordnet ist; eine Platte (7), die an der unteren Einheit (2) angeordnet ist und die einen Kanal (6) aufweist, in dem die Schaft (5) beweglich angeordnet ist; mindestens einen Vorsprung (8), der an dem Schaft (5) angeordnet ist, wobei der Kanal (6) ein unteres Gehäuse (10) und ein oberes Gehäuse (11) aufweist, die in vertikaler Richtung übereinander angeordnet sind und der Vorsprung (8) in das untere Gehäuse (10) und das obere Gehäuse (11) eingepasst ist; **gekennzeichnet ist er durch** eine untere Position (P1), in der der Vorsprung (8) in das untere Gehäuse (10) eingepasst ist, und eine obere Position (P2), in der der Vorsprung (8) in das obere Gehäuse (11) eingepasst wird, nachdem die obere Einheit (3) in die vertikale Position gebracht und dann nach oben gezogen und zurück in die horizontale Position gebracht wurde.

2. Ein Toaster (1), wie in Anspruch 1 aufgeführt, **ist dadurch gekennzeichnet, dass** der Vorsprung (8) in das untere Gehäuse (10) oder das obere Gehäuse (11) eingepasst ist, wenn sich die obere Einheit (3) in der horizontalen Position befindet.

3. Ein Toaster (1), wie in Anspruch 1 oder 2 aufgeführt, **ist dadurch gekennzeichnet, dass** der Kanal (6) die Bewegung der oberen Einheit (3) in vertikaler Richtung begrenzt, wenn sich die obere Einheit (3) in der vertikalen Position befindet.

4. Ein Toaster (1), wie in einem der vorherigen Ansprüchen aufgeführt, **ist dadurch gekennzeichnet, dass**, wenn sich die obere Einheit (3) in der vertikalen Position befindet, der Vorsprung (8) keine Oberfläche entlang des Kanals (6) berührt, so dass sich die obere Einheit (3) entlang der Länge des Kanals (6) in vertikaler Richtung bewegen kann.

5. Ein Toaster (1), wie in einem der vorherigen Ansprüchen aufgeführt, **ist dadurch gekennzeichnet, dass**, wenn sich die obere Einheit (3) in der unteren Position (P1) befindet, ist der Vorsprung (8) innerhalb des unteren Gehäuses (10) fixiert, und wenn sich die obere Einheit (3) in der oberen Position (P2) befindet, ist der Vorsprung innerhalb des oberen Gehäuses (11) fixiert, so dass der hintere Teil der oberen Einheit (3) daran gehindert wird, sich nach oben zu bewegen, wenn die obere Einheit (3) mittels des Griffs (4) gegen die untere Einheit (2) gedrückt wird.

## Revendications

1. Un grille-pain (1) **comprenant** une unité inférieure (2) sur laquelle est placé l'aliment à cuire ; une unité supérieure (3) qui a une position horizontale dans laquelle l'unité supérieure (3) couvre l'unité inférieure (2) et une position verticale à laquelle l'unité supérieure (3) est amenée en étant déplacée depuis la position horizontale et dans laquelle l'unité supérieure (3) est perpendiculaire à l'unité inférieure (2) ; une poignée (4) qui est disposée sur l'unité supérieure (3) et qui permet à l'unité supérieure (3) d'être déplacée ; au moins un axe (5) qui est disposé sur l'unité supérieure (3) ; une plaque (7) qui est disposée sur l'unité inférieure (2) et qui a un canal (6) dans lequel l'axe (5) est placé de manière mobile ; au moins une saillie (8) qui est disposée sur l'axe (5), et le canal (6) a un logement inférieur (10) et un logement supérieur (11) étant disposés l'un au-dessus de l'autre dans la direction verticale, la saillie (8) est ajustée à l'intérieur du logement inférieur (10) et du logement supérieur (11) ; **est caractérisé en ce qu'il** présente une position inférieure (P1) dans laquelle la saillie (8) est ajustée dans le logement inférieur (10) et une position supérieure (P2) dans laquelle la saillie (8) est ajustée dans le logement supérieur (11) après que l'unité supérieure (3) a été amenée en position verticale, puis tirée vers le haut et ramenée en position horizontale.

2. Un grille-pain (1) selon la déclaration 1, **est caractérisé en ce que** la saillie (8) est ajustée dans l'un des logements inférieur (10) et supérieur (11) lorsque l'unité supérieure (3) est en position horizontale.

3. Un grille-pain (1) selon la déclaration 1 ou 2, **est caractérisé en ce que** le canal (6) limite le mouvement de l'unité supérieure (3) dans la direction verticale lorsque l'unité supérieure (3) est en position verticale.

4. Un grille-pain (1) selon l'une quelconque des déclarations ci-dessus, **est caractérisé en ce que,** lorsque l'unité supérieure (3) est dans la position verticale, la saillie (8) n'est en contact avec aucune surface le long du canal (6) de sorte que l'unité supérieure (3) peut se déplacer sur la longueur du canal (6) dans la direction verticale.

5. Un grille-pain (1) selon l'une quelconque des déclarations précédentes, **est caractérisé en ce que,** lorsque l'unité supérieure (3) est dans la position inférieure (P1), la saillie (8) est fixée à l'intérieur du logement inférieur (10) et lorsque l'unité supérieure (3) est dans la position supérieure (P2), la saillie est fixée à l'intérieur du logement supérieur (11), de sorte que la partie arrière de l'unité supérieure (3) est empêchée de se déplacer vers le haut lorsque l'unité supérieure (3) est poussée vers l'unité inférieure (2) au moyen de la poignée (4).
